# FASCICULE DE BREVET EUROPEEN

(11) **EP 2 496 864 B1**
(45) Date de publication et mention de la délivrance du brevet: **05.03.2014**
(21) Numéro de dépôt: 10763821.5
(22) Date de dépôt: 07.09.2010
(51) Int. Cl.: F16H 59/02, G05G 1/06

(54) **LEVIER DE VITESSE COMPORTANT UN POMMEAU FIXE DE FACON DEMONTABLE SUR LA TIGE DU LEVIER**
GETRIEBESCHALTHEBEL, DER EINEM ENTFERNBAREN AUF DEM SCHALTHEBELSCHAFT FIXIERTEN KNAUF BEHINHALTET
SHIFT LEVER COMPRISING A BALL GRIP REMOVABLY FIXED ON THE SHIFT LEVER STEM

(30) Priorité: 02.11.2009 FR 0957741
(43) Date de publication de la demande: 12.09.2012
(73) Titulaire: Renault S.A.S., 92100 Boulogne-Billancourt (FR)
(72) Inventeur: CHHEANG, Nakry, F-78470 St Remy Les Chevreuse (FR); CZEPCZAK, Raphael, F-91120 Palaiseau (FR)
(86) Numéro de dépôt international: PCT/FR2010/051853
(87) Numéro de publication internationale: WO 2011/051583

(56) Documents cités:
- WO-A1-91/02912
- FR-A1- 2 879 523
- US-A- 5 588 329

## Description

La présente invention concerne un levier de vitesse pour véhicule automobile et plus précisément la fixation du pommeau de ce levier à la tige de celui-ci.

On sait que le levier de vitesse sert à changer les rapports de la boîte à vitesses d'un véhicule automobile et comporte un pommeau servant à la préhension manuelle du levier par le conducteur et une tige reliée au mécanisme qui permet de changer les rapports de la boîte à vitesses.

Le pommeau du levier de vitesse doit être esthétique, ergonomique pour le conducteur et ne doit en aucun cas se détacher de la tige lors de la conduite du véhicule.

Ainsi, la fixation du pommeau sur la tige doit résister à des efforts d'arrachement de l'ordre de 20 kg.

Par ailleurs, le montage du pommeau doit être facile, c'est-à-dire nécessiter le moins d'efforts possible pour les opérateurs, sans risque de détérioration des pièces.

De même, le démontage du pommeau doit pouvoir être exécuté facilement, avec un outillage simple et sans risque d'abimer les pièces.

Le document WO 2002/01093 décrit à titre d'exemple l'assemblage d'un pommeau à l'extrémité de la tige par translation axiale du pommeau suivie d'une rotation pour réaliser un verrouillage du type baïonnette.

La translation n'exige pas d'effort important.

En revanche, la rotation nécessite des efforts non négligeables dus aux frottements.

De plus, ce mode d'assemblage nécessite une concentricité et un alignement angulaire parfaits entre le pommeau et la tige qui sont difficiles à maîtriser.

Par ailleurs, ce type d'assemblage ne laisse pas une place suffisante pour insérer dans le pommeau un lest suffisamment lourd.

Or, la présence d'un tel lest est importante pour augmenter l'inertie du pommeau lors du passage des vitesses et l'ergonomie du conducteur, ainsi que pour amortir les vibrations provenant du moteur.

Le document WO 91/02912 décrit un levier de vitesse selon le preambule de la revendication 1.

Le but de la présente invention est de remédier aux inconvénients précités.

Ce but est atteint, selon l'invention, grâce à un levier de vitesse selon la revendication 1.

Selon un premier aspect de l'invention, l'embout présente une languette élastique qui s'étend latéralement selon une direction longitudinale le long de la partie d'une de sa surface latérale.

La languette peut s'étendre le long de la partie de la surface latérale située sensiblement à l'opposé d'une partie de la surface latérale sur laquelle s'étend au moins une nervure ou rainure apte à s'engager dans au moins une nervure ou rainure complémentaire du pommeau.

Le pourtour de l'embout peut présenter au moins une rainure ou nervure apte à s'engager dans au moins une rainure ou nervure réalisée dans l'évidement du pommeau.

Le montage du pommeau sur l'embout de la tige est ainsi particulièrement simple et nécessite peu d'efforts puisqu'il se limite à une simple translation axiale du pommeau par rapport à l'embout par exemple pour que les nervures s'engagent dans les rainures correspondantes, et qu'en fin de course le bec d'accrochage de la languette s'encliquète sur une surface interne du pommeau.

Selon l'invention, le pommeau comporte un évidement pour y recevoir un embout de façon démontable, ledit pommeau comportant en outre une surface interne agencée pour recevoir un bec d'accrochage formé à une extrémité libre d'une languette élastique formée sur l'embout, l'évidement comportant un fond apte à former butée pour l'embout lors de son engagement dans l'évidement, ledit fond comportant une ouverture apte à y engager le bec d'accrochage de ladite languette.

Un tel agencement, avec une butée et une ouverture dans le fond, permet notamment un montage simplifié, sans mouvement de rotation. En effet, un simple encliquetage par translation axiale n'engendre aucuns frottements ou autres efforts susceptibles de détériorer le pommeau lors de son montage sur l'embout de la tige.

Le pommeau présente une gorge réalisée dans l'évidement du pommeau apte à recevoir la languette élastique lors de l'engagement de l'embout dans le pommeau.

L'ouverture débouche dans une cavité dans laquelle est située la surface interne sur laquelle le bec d'accrochage de ladite languette est apte à être encliqueté.

La cavité peut être fermée par un bouchon communément appelé vignette car elle porte la grille de passage des rapports de vitesse.

La cavité est apte à recevoir un organe pour verrouiller le bec d'accrochage de la languette par rapport à ladite surface.

L'organe peut être constitué par une nervure faisant saillie sur la face intérieure du bouchon prévue pour recouvrir la cavité et apte à prendre appui sur ledit bec d'accrochage.

D'autres particularités et avantages de l'invention apparaîtront encore tout au long de la description ci-après.

Aux dessins annexés, donnés à titre d'exemples, non limitatifs :
- la figure 1 est une vue en perspective éclatée d'un levier de vitesse selon un mode de réalisation de l'invention,
- la figure 2 est une vue en coupe suivant le plan de l'axe de la tige du levier de vitesse,
- la figure 3 est une vue de dessus du levier de vitesse,
- la figure 4 est une vue en coupe suivant le plan C-C de la figure 2,
- la figure 5 est une vue en coupe suivant le plan B-B de la figure 2,
- la figure 6 est une vue éclatée de la partie supérieure du pommeau selon une autre version de l'invention,
- la figure 7 est une vue en coupe suivant l'axe de la tige, de la partie supérieure du pommeau selon la version de la figure 6,
- la figure 8 est une vue de dessus du pommeau représenté sur les figures 6 et 7,
- la figure 9 est une vue en coupe analogue aux figures 2 et 7, d'une troisième version de l'invention, le bouchon du pommeau étant enlevé et la butée de verrouillage n'étant pas pliée,
- la figure 10 est une vue analogue à la figure 9, la butée de verrouillage étant pliée,
- la figure 11 est une vue de dessus du pommeau représenté sur la figure 10.

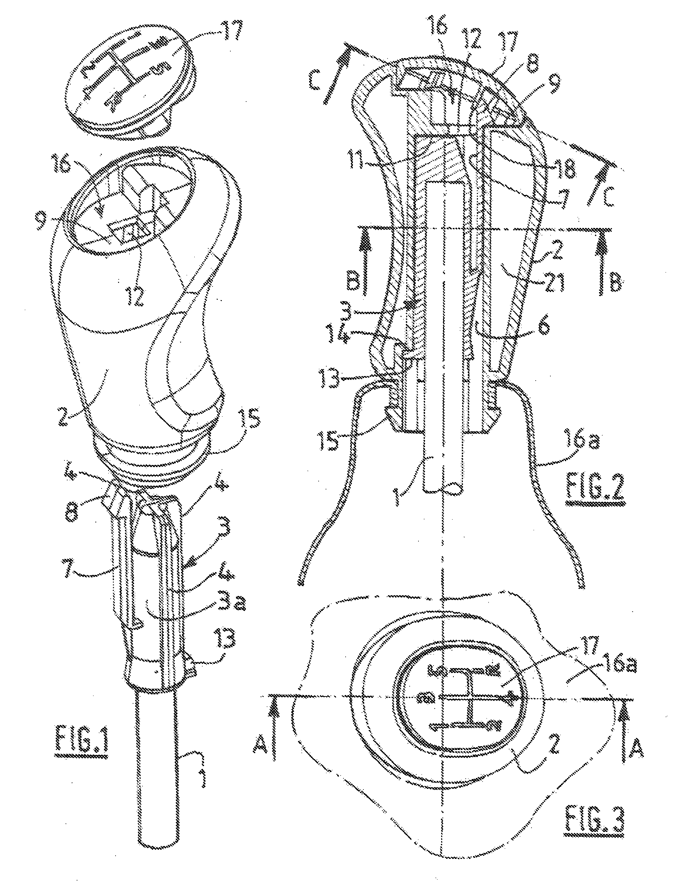

Dans la version représentée sur les figures 1 à 5, le levier de vitesse selon l'invention, comprend une tige 1 comportant une extrémité sur laquelle est fixé de façon démontable un pommeau 2.

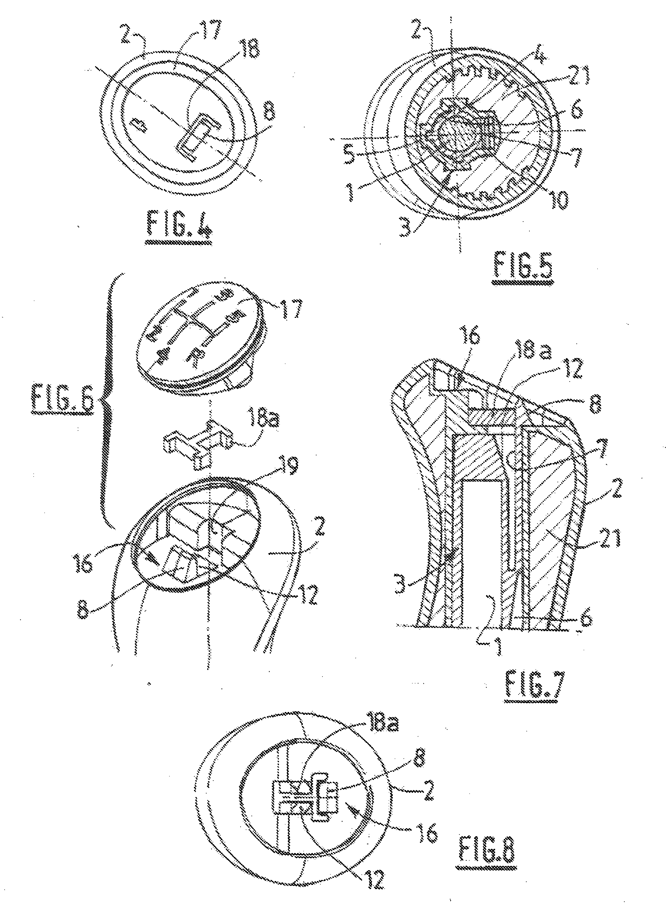

L'extrémité de la tige 1 comporte un embout 3 situé vers l'une de ses extrémités présentant plusieurs nervures 4 réparties sur le pourtour et le long de l'embout 3, ces nervures 4 étant engagées (voir figure 5) dans des rainures 5 réalisées dans un évidement 6 du pommeau 2.

L'embout 3 de la tige 1 porte en outre une languette élastique 7 s'étendant latéralement dans la direction de la longueur de l'embout 3 et comportant à son extrémité libre un bec d'accrochage 8 encliqueté (voir figure 2) sur une surface interne 9 du pommeau 2 sensiblement perpendiculaire à l'axe de la tige 1.

L'embout 3 peut être en matière plastique surmoulée sur l'extrémité de la tige 1.

Alternativement, l'embout 3 peut être venu de matière avec la tige 1, afin de faciliter la fabrication du levier de vitesse.

Comme montré par les figures 2 et 5, la languette 7 s'étend le long d'une partie de la surface latérale 3a de l'embout 3 qui est située à l'opposé d'une partie de cette surface latérale sur laquelle s'étendent les nervures 4 dont le nombre est égal à 3.

Par ailleurs, la languette 7 est engagée dans une gorge 10 (voir figure 5) réalisée dans l'évidement 6 du pommeau 2.

La figure 2 montre que l'extrémité de l'embout 3 est en butée contre un fond 11 de l'évidement 6 du pommeau 2 situé près de son extrémité opposée à la tige 1.

Le fond 11 de l'évidement 6 comporte (voir figure 2) une ouverture 12 dans laquelle est engagé le bec d'accrochage 8 de la languette 7.

Cette ouverture 12 est située dans le plan de la surface 9 sur laquelle est encliqueté le bec 8 de la languette 7.

Par ailleurs, l'extrémité inférieure de l'embout 3 est en butée grâce à une saillie 13 contre un décrochement 14 de l'évidement 6.

L'extrémité inférieure du pommeau 2 porte une collerette 15 visible sur les figures 1 et 2 servant à la fixation d'un habillage 16a qui masque le levier 1.

Les figures 1 et 2 montrent également que l'ouverture 12 débouche dans une cavité 16 dans laquelle est située la surface 9 sur laquelle est encliqueté le bec d'accrochage 8 de la languette 7.

Cette cavité 16 peut être fermée par un bouchon 17 qui est communément appelé vignette car il porte la grille de passage des vitesses comme montré sur les figures 1 et 3.

La cavité 16 comporte un organe pour verrouiller le bec d'accrochage 8 de la languette 7 par rapport à la surface 9.

Dans l'exemple montré par les figures 2 et 4, cet organe de verrouillage est constitué par une nervure 18 faisant saillie sur la face intérieure du bouchon 17 et prenant appui sur le bec d'accrochage 8 de la languette 7, en maintenant ainsi cette dernière en position de verrouillage.

Dans la version représentée sur les figures 6, 7 et 8, l'organe de verrouillage est constitué par une entretoise 18 disposée dans la cavité 16 et prenant appui sur le bec d'accrochage 8 de la languette 7 comme montré par les figures 7 et 8.

Cette entretoise 18 est sensiblement en forme de H et l'un de ses côtés est partiellement emboîté dans un logement 19, tandis que son côté opposé est en appui contre le bec d'accrochage 8.

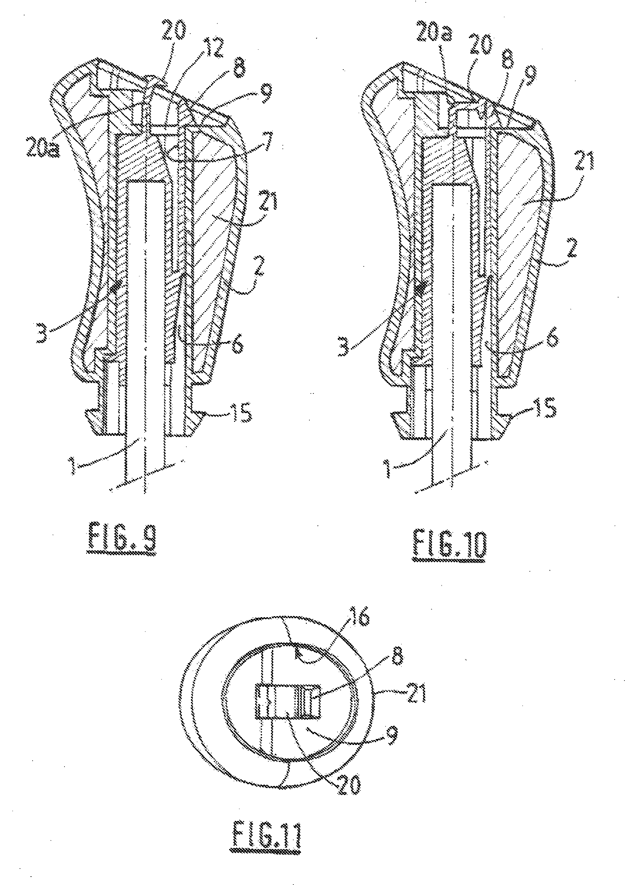

Dans l'exemple représenté sur les figures 9, 10 et 11, l'organe de verrouillage est constitué par une butée 20 moulée d'une seule pièce avec l'extrémité de l'embout 3 qui est en butée contre le fond 11 de l'évidement 6 du pommeau 2.

Cette butée 20 est engagée dans l'ouverture 12 dans laquelle est engagé le bec d'accrochage 8 de la languette 7.

On voit sur les figures 10 et 11 que la butée 20 peut être pliée pour pouvoir prendre appui contre le bec d'accrochage 8 afin de maintenir celui-ci en position de verrouillage par rapport à la surface 9.

Pour faciliter son pliage, cette butée 20 comporte une zone amincie 20a formant charnière.

Pour fixer le pommeau 2 sur l'embout 3 porté par la tige 1 du levier de vitesse, il suffit d'effectuer une translation du pommeau 2 par rapport à l'embout 3 pour que les nervures 4 et la languette 7 s'engagent dans les rainures 5 et la gorge 10 correspondantes de l'évidement 6 du pommeau 2.

En fin de course de translation, le bec d'encliquetage 8 de la languette 7 s'encliquète sur la surface 9 du pommeau et l'extrémité de l'embout 3 bute contre le fond 11 de l'évidement 6, tandis que la saillie 13 de l'embout 3 bute contre le décrochement 14.

Pour compléter le verrouillage de l'embout 3 par rapport au pommeau 2 il suffit dans le cas de la version représentée sur les figures 1 à 5, d'enfoncer le bouchon 17 dans la cavité 16 du pommeau 2 ce qui a pour effet de mettre la nervure 18 du bouchon en appui contre le bec d'accrochage 8 de la languette.

Dans cette position, le pommeau 2 ne peut plus être enlevé.

Pour le démonter, il est nécessaire d'enlever le bouchon 17 et de pousser sur le bec d'accrochage 8 pour le dégager de la surface 9 puis de tirer le pommeau 2 pour l'enlever de l'embout 3.

Dans le cas de la version représentée sur les figures 6, 7 et 8 pour verrouiller le bec d'accrochage 8, il faut d'abord mettre en place l'entretoise 18a pour que celle-ci s'appuie contre le bec d'accrochage 8 puis enfoncer le bouchon 17.

Pour démonter le pommeau 2, il faut d'abord enlever le bouchon 17 puis retirer l'entretoise 18a.

Ensuite, on procède comme dans le cas de la première version.

Dans le cas de la troisième version représentée sur les figures 9, 10 et 11, il faut pour démonter le pommeau 2, enlever le bouchon 17, déplier la butée 20 pour la dégager du bec d'accrochage 8.

L'assemblage entre le pommeau 2 et la tige 1 que l'on vient de décrire présente l'avantage de nécessiter des efforts très réduits et de consister en un simple mouvement de translation.

Par ailleurs, le diamètre de l'embout 3 et de l'évidement 6 sont relativement faible de sorte qu'il subsiste dans le pommeau 2 un espace pour mettre un lest 21 ayant une masse suffisante afin d'obtenir une inertie optimale.

Bien entendu, l'invention n'est pas limitée aux exemples que l'on vient de décrire.

Ainsi, l'évidement 6 pourrait comporter des nervures coopérant avec des rainures formées sur l'embout 3.

## Revendications

1. Levier de vitesse comprenant une tige sur laquelle est formé ou monté un embout (3) et un pommeau (2), ledit pommeau (2) comportant un évidement (6) conformé pour recevoir l'embout (3) de façon démontable, le pommeau (2) comportant en outre une surface interne (9) agencée pour recevoir un bec d'accrochage (8) formé à une extrémité libre d'une languette élastique (7) formée sur l'embout (3), l'évidement (6) comportant un fond (11) apte à former butée pour l'embout (3) lors de son engagement dans l'évidement (6), ledit fond comportant une ouverture (12) apte à y engager le bec d'accrochage (8) de ladite languette (7), l'ouverture (12) débouchant dans une cavité (16) dans laquelle est située la surface interne (9) sur laquelle le bec d'accrochage (8) de ladite languette (7) est apte à être encliquetée, **caractérisé en ce que** le levier comprend un organe de verrouillage du bec d'accrochage (8) de la languette (7) par rapport à la surface interne (9) cet organe étant en outre prévu à l'intérieur de la cavité (16).

2. Levier de vitesse selon la revendication précédente, **caractérisé en ce qu'**il comporte une gorge (10) réalisée dans l'évidement (6) du pommeau (2) apte à recevoir la languette élastique (7) lors de l'engagement de l'embout (3) dans le pommeau (2).

3. Levier de vitesse selon la revendication 3, **caractérisé en ce que** ladite cavité (16) est apte à être fermée par un bouchon (17).

4. Levier de vitesse selon la revendication 3, **caractérisé en ce que** ledit organe de verrouillage est constitué par une nervure (18) faisant saillie sur la face intérieure du bouchon (17) prévue pour recouvrir la cavité (16) et apte à prendre appui sur ledit bec d'accrochage (8).

5. Levier de vitesse selon l'une quelconque des revendications 1 à 3, **caractérisé en ce que** ledit organe est constitué par une entretoise (18a) disposée dans la cavité (16) et apte à prendre appui sur ledit bec d'accrochage (8).

6. Levier de vitesse selon la revendication 5, **caractérisé en ce que** ledit organe est constitué par une butée (20) moulée vers l'extrémité de l'embout (3) et apte à être pliée pour prendre appui contre le bec de verrouillage (8), une fois l'embout (3) engagé dans le pommeau (2) jusqu'en butée sur le fond (11).

7. Levier de vitesse selon l'une quelconque des revendications précédentes, **caractérisé en ce que** la languette élastique (7) s'étend latéralement selon une direction longitudinale le long de la partie d'une surface latérale (3a) de l'embout (3).

8. Levier de vitesse selon la revendication précédente, **caractérisé en ce que** la languette (7) s'étend le long de la partie de la surface latérale (3a) située sensiblement à l'opposé d'une partie de la surface latérale sur laquelle s'étend au moins une nervure ou rainure (4) apte à s'engager dans au moins une nervure ou rainure (5) complémentaire du pommeau (2).

9. Levier de vitesse selon l'une des revendications 7 ou 8, **caractérisé en ce que** l'embout (3) comporte sur son pourtour au moins une rainure ou nervure (4) apte à s'engager dans au moins une rainure ou nervure (5) réalisée dans l'évidement (6) du pommeau (2).

## Patentansprüche

1. Gangschalthebel, der eine Stange enthält, auf der ein Aufsatz (3) und ein Schaltknauf (2) geformt oder montiert sind, wobei der Schaltknauf (2) eine Aussparung (6) aufweist, die gestaltet ist, um den Aufsatz (3) ausbaubar aufzunehmen, wobei der Schaltknauf (2) außerdem eine Innenfläche (9) aufweist, die eingerichtet ist, um eine Einhaknase (8) aufzunehmen, die an einem freien Ende einer auf dem Aufsatz (3) geformten elastischen Zunge (7) geformt ist, wobei die Aussparung (6) einen Boden (11) aufweist, der einen Anschlag für den Aufsatz (3) bei seinem Einführen in die Aussparung (6) formen kann, wobei der Boden eine Öffnung (12) aufweist, in die die Einhaknase (8) der Zunge (7) eingeführt werden kann, wobei die Öffnung (12) in einen Hohlraum (16) mündet, in dem sich die Innenfläche (9) befindet, auf der die Einhaknase (8) der Zunge (7) eingerastet werden kann, **dadurch gekennzeichnet, dass** der Hebel ein Verriegelungsorgan der Einhaknase (8) der Zunge (7) bezüglich der Innenfläche (9) enthält, wobei dieses Organ außerdem im Inneren des Hohlraums (16) vorgesehen ist.

2. Gangschalthebel nach dem vorhergehenden Anspruch, **dadurch gekennzeichnet, dass** er eine in der Aussparung (6) des Schaltknaufs (2) hergestellte Kehle (10) aufweist, die die elastische Zunge (7) beim Einsetzen des Aufsatzes (3) in den Schaltknauf (2) aufnehmen kann.

3. Gangschalthebel nach Anspruch 3, **dadurch gekennzeichnet, dass** der Hohlraum (16) von einem Deckel (17) verschlossen werden kann.

4. Gangschalthebel nach Anspruch 3, **dadurch gekennzeichnet, dass** das Verriegelungsorgan aus einer an der Innenseite des Deckels (17) vorstehenden Rippe (18) besteht, die vorgesehen ist, um den Hohlraum (16) zu bedecken, und auf der Einhaknase (8) aufliegen kann.

5. Gangschalthebel nach einem der Ansprüche 1 bis 3, **dadurch gekennzeichnet, dass** das Organ aus einem Abstandshalter (18a) besteht, der im Hohlraum (16) angeordnet ist und auf der Einhaknase (8) aufliegen kann.

6. Gangschalthebel nach Anspruch 5, **dadurch gekennzeichnet, dass** das Organ aus einem Anschlag (20) besteht, der zum Ende des Aufsatzes (3) hin geformt ist und umgebogen werden kann, um gegen die Verriegelungsnase (8) anzuliegen, wenn der Aufsatz (3) bis zum Anschlag gegen den Boden (11) in den Schaltknauf (2) eingeführt ist.

7. Gangschalthebel nach einem vorhergehenden Ansprüche, **dadurch gekennzeichnet, dass** die elastische Zunge (7) sich seitlich in einer Längsrichtung entlang des Teils einer Seitenfläche (3a) des Aufsatzes (3) erstreckt.

8. Gangschalthebel nach dem vorhergehenden Anspruch, **dadurch gekennzeichnet, dass** die Zunge (7) sich entlang des Teils der Seitenfläche (3a) erstreckt, der sich im Wesentlichen entgegengesetzt zu einem Teil der Seitenfläche befindet, auf dem sich mindestens eine Rippe oder Rille (4) erstreckt, die in mindestens eine komplementäre Rippe oder Rille (5) des Schaltknaufs (2) eingreifen kann.

9. Gangschalthebel nach einem der Ansprüche 7 oder 8, **dadurch gekennzeichnet, dass** der Aufsatz (3) auf seinem Umfang mindestens eine Rille oder Rippe (4) aufweist, die in mindestens eine Rille oder Rippe (5) eingreifen kann, die in der Aussparung (6) des Schaltknaufs (2) hergestellt ist.

## Claims

1. Gear-shift lever comprising a shaft on which there is formed or mounted an end-piece (3) and a knob (2), the said knob (2) comprising a recess (6) configured to receive the end-piece (3) in a removable manner, the knob (2) additionally comprising an internal surface (9) designed to receive a hooking nose (8) formed at a free end of an elastic tongue (7) formed on the end-piece (3), the recess (6) comprising a bottom (11) able to form a stop for the end-piece (3) during its engagement in the recess (6), the said bottom comprising an opening (12) able to engage the hooking nose (8) of the said tongue (7) therein, the opening (12) opening into a cavity (16) in which there is situated the internal surface (9) on which the hooking nose (8) of the said tongue (7) is able to be snap-fastened, **characterized in that** the lever comprises a member for locking the hooking nose (8) of the tongue (7) with respect to the internal surface (9), this member additionally being provided inside the cavity (16).

2. Gear-shift lever according to the preceding claim, **characterized in that** it comprises a groove (10) formed in the recess (6) of the knob (2) and able to receive the elastic tongue (7) during the engagement of the end-piece (3) in the knob (2).

3. Gear-shift lever according to Claim 3, **characterized in that** the said cavity (16) is able to be closed by a cap (17).

4. Gear-shift lever according to Claim 3, **characterized in that** the said locking member is formed by a rib (18) projecting from the inner face of the cap (17) provided to cover the cavity (16) and able to bear on the said hooking nose (8).

5. Gear-shift lever according to any one of Claims 1 to 3, **characterized in that** the said member is formed by a spacer (18a) arranged in the cavity (16) and able to bear on the said hooking nose (8).

6. Gear-shift lever according to Claim 5, **characterized in that** the said member is formed by a stop (20) moulded towards the end of the end-piece (3) and able to be folded in order to bear against the locking nose (8), once the end-piece (3) has been engaged in the knob (2) until it butts against the bottom (11).

7. Gear-shift lever according to any one of the preceding claims, **characterized in that** the elastic tongue (7) extends laterally in a longitudinal direction along the part of a lateral surface (3a) of the end-piece (3).

8. Gear-shift lever according to the preceding claim, **characterized in that** the tongue (7) extends along the part of the lateral surface (3a) situated substantially at the opposite end from a part of the lateral surface on which there extends at least one rib or groove (4) able to engage in at least one complementary rib or groove (5) of the knob (2).

9. Gear-shift lever according to either of Claims 7 and 8, **characterized in that** the end-piece (3) comprises on its periphery at least one groove or rib (4) able to engage in at least one groove or rib (5) formed in the recess (6) of the knob (2).
